# EUROPÄISCHE PATENTSCHRIFT

(11) **EP 1 800 918 B1**
(45) Veröffentlichungstag und Bekanntmachung des Hinweises auf die Patenterteilung: **09.09.2009**
(21) Anmeldenummer: 06025782.1
(22) Anmeldetag: 13.12.2006
(51) Int. Cl.: B60H 1/34

(54) **Luftausströmer mit Drallströmung**
Air nozzle with vortex air flow
Buse d'air à écoulement tourbillonnant

(30) Priorität: 21.12.2005 DE 102005061722
(43) Veröffentlichungstag der Anmeldung: 27.06.2007
(73) Patentinhaber: Behr GmbH & Co. KG, 70469 Stuttgart (DE)
(72) Erfinder: Klingler, Dietrich, Dipl.-Ing., 73540 Heubach (DE); Großmann, Sebastian, 71696 Möglingen (DE); Lang, Matthias, 70649 Stuttgart (DE); Benamira, Salah, 70180 Stuttgart (DE)

(56) Entgegenhaltungen:
- WO-A-20/05016673
- DE-A1- 2 902 733
- DE-A1- 3 736 448
- DE-U1- 29 914 962

## Beschreibung

Die Erfindung betrifft einen Luftausströmer, insbesondere für eine Klimatisierung eines Fahrzeuginnenraums.

Im Stand der Technik sind Luftausströmer in diversen Varianten bekannt. Sie dienen dazu, im Fahrzeuginnenraum schnell ein angenehmes Klima zu schaffen. Es ist ihre Aufgabe, zu diesem Zweck genügend Luft in den Innenraum zu befördern.

So beschreibt die DE 100 36 776 A1 eine Einrichtung zur Klimatisierung eines Innenraumes, insbesondere eine Fahrzeug-Klimatisierungseinrichtung, mit einem Klimagerät mit einer Klimaluft-Führung, sowie mit einem Luftheizgerät mit einer Heizluft-Führung. Die Klimaluft-Führung und die Heizluft-Führung sind mit dem Innenraum verbunden und über ein Mündungsstück in Form einer Doppeldüse zusammengeführt, welche ein Innenrohr und ein konzentrisches Außenrohr aufweist. Dabei kann im Ringraum zwischen dem Innenrohr und Außenrohr eine Drallströmungs-Leiteinrichtung vorgesehen sein, die vorzugsweise einstellbar ist.

Bei dieser Einrichtung handelt es sich um einen zweikanaligen Luftausströmer mit einem inneren Luftführungskanal für einen konzentrierten Luftstrahl (auch Spotbereich genannt) und einem äußeren Luftführungskanal für eine Drallströmung (auch Diffusbereich genannt). In vollständig geöffneter Stellung hat der Diffusbereich einen hohen Druckabfall und eine starke Geräuschentwicklung. Die Effizienz des Spotbereichs wird dadurch reduziert.

Die DE 299 14 962 U1 beschreibt einen einkanaligen Luftausströmer, insbesondere für eine Kraftfahrzeuglüftung, mit einem Drallgeber, der mehrere Leitschaufeln hat, die jeweils um eine Schwenkachse verschwenkbar sind. Die Schwenkachsen sind etwa radial um eine gemeinsame Zentralachse angeordnet, wobei eine Drehbewegung der Zentralachse als Schwenkbewegung auf die Schwenkachsen der Leitschaufeln übertragbar ist. Die den Leitschaufeln zugeordneten Schwenkachsen sind jeweils mit einer Verbindungsstange mit Langloch drehfest verbunden, welche mit einem zentralen Reib- oder Zahnrad der zentralachse in Antriebsverbindung stehen. Die Zentralachse trägt an ihrem abströmseitigen Achsende eine manuell betätigbarer Drehmechanismus.

Bei diesem Luftausströmer kann aufgrund der geringen Tiefe und geringen Ablenkungswirkung des Drallgebers nur eine Strömung mit schwachem Drall erzeugt werden.

Aus der EP 0 936 091 B1 ist ein Luftausströmer bekannt, bei welchem eine Leitrampe in Spiral- oder Helixform vorgeschlagen wird. Diese bewirkt eine Strömung mit starkem Drall und damit eine größere Verteilung des in ihr geführten Luftstroms in Art eines Diffusbereiches.

Durch die konstante Drallströmung im Diffusbereich dieses Luftausströmers ist jedoch eine Anpassung der Klimatisierungswirkung an jeweilige Umgebungsbedingungen nicht möglich.

Aus der DE 37 36 448, der als nächstliegender Stand der Technik angesehen wird, ist weiterhin ein Luftausströmer bekannt, wobei mittels Verstellen von im Luftkanal angeordneten Luftleitelemente eine Helix zum Erzeugen einer einstellbaren Drallströmung bildbar ist.

Der Erfindung liegt die Aufgabe zugrunde, einen Luftausströmer der eingangs genannten Art anzugeben, welcher bei einfachem Aufbau eine Anpassung einer Klimatisierungswirkung erlaubt, wobei ein breiter Variationsbereich der Anpassung möglich sein soll.

Die Aufgabe wird erfindungsgemäß gelöst durch einen Luftausströmer, welcher die in Anspruch 1 angegebenen Merkmale aufweist.

Vorteilhafte Ausgestaltungen des Verfahrens sind Gegenstand der Unteransprüche.

Die Erfindung schlägt einen Luftausströmer mit mindestens einem Luftführungskanal und in diesem angeordneten Luftleitelementen vor, wobei mittels Verstellen der Luftleitelemente mindestens eine Helix zum Erzeugen einer einstellbaren Drallströmung bildbar ist, wobei die Helix in axialer Richtung des Luftausströmers in mindestens zwei Teilsegmente untergliedert ist, die von den Luftleitelementen gebildet sind.

Im Sinne der Erfindung kommt als Helix jede sich rotierend in die Tiefe des Raums fortsetzende Struktur in Betracht. Eine solche Struktur kann insbesondere auch abschnittsweise linear, schneckenhausförmig, spiralförmig oder als schraubenförmige Wendel ausgebildet sein. Die Luftieitetemente sind vorzugsweise entsprechend gekrümmt oder eben ausgeführt.

Der erfindungsgemäße Luftausströmer weist mehrere in ihrer Position verstellbare Luftleitelemente auf, die mindestens eine verstellbare Helix bilden, die in mindestens zwei Teilsegmente untergliedert ist. Die Teilsegmente werden in einfacher Weise von den Luftleitelementen gebildet. In einer bestimmten Stellung der Luftleitelemente liegt die mindestens eine Helix in durchgehender Form vor. In anderen Stellungen ist die Helix unterbrochen. Die Luftleitelemente wirken dann in Abhängigkeit ihres Anstellwinkels weniger strömungsbehindernd als in der Helixstellung, in der die Helix durchgehend vorliegt. Dadurch werden bei Nichtverwendung der Helix der Druckverlust und die Geräuschentwicklung im Diffusbereich verringert.

Eine spezielle Ausführungsform ist der Luftführungskanal als Ringrohr ausgebildet und als äußerer Luftführungskanal um ein Zentralelement herum angeordnet. Auf diese Weise kann auch ein einkanaliger, ringförmiger Luftausströmer mit einer vorteilhaften verstellbaren Helix versehen sein.

In einer weiteren speziellen Ausführungsform umgibt der Luftführungskanal mindestens einen weiteren Luftführungskanal und verläuft parallel zu diesem. Mit anderen Worten: Ein äußerer, ringförmiger Luftführungskanal umgibt einen inneren, zylinderförmigen Luftführungskanal. Dies ermöglicht verschiedene Belüftungsarten, z. B. eine spotförmige Belüftung und eine diffuse Belüftung. Durch den verringerten Druckabfall bei einer diffusen Belüftung bei Nichtverwendung der Helix kann eine höhere Effizienz der Belüftung erreicht werden.

Darüber hinaus weist eine weitere vorteilhafte Ausführungsform eine Klappe im inneren Luftführungskanal auf, welche mit einem Bedienelement verbunden ist, das der Verstellung der Luftleitelemente im äußeren Luftführungskanal dient. Auf diese Weise sind die Luftelemente, welche die Drallströmung für die diffuse Strömung im äußeren Luftführungskanal steuern, simultan mit der Klappe zur Einstellung der spotförmigen Strömung verstellbar. Da die mindestens eine verstellbare Helix insbesondere einen verringerten Druckverlust im äußeren Luftführungskanal bewirkt, ist so mit einer einzigen Bedienungshandlung eine effiziente Belüftung einstellbar.

In einer weiteren Ausbildung ist das Bedienelement als Verstellring an einer Austrittsöffnung des Luftausströmers ausgebildet und umgibt beide Luftführungskanäle. Dadurch ist eine einfache Bedienbarkeit des Luftausströmers für verschiedene Belüftungsarten möglich. Zudem kann so entlang des äußeren Luftführungskanals auf einfache Weise eine mechanische Verbindung zu den Luftleitelementen hergestellt werden.

Eine erste bevorzugte Ausgestaltung der Erfindung zeichnet sich durch genau zwei Helices aus, welche durch eine entsprechende Anzahl von Luftleitelementen gebildet werden. Eine dritte bevorzugte Ausgestaltung der Erfindung zeichnet sich. durch genau sechs Helices aus. Die Helices verlaufen sehr steil innerhalb des äußeren Luftführungskanals. Dem Erfindungsgedanken folgend sind auch Ausgestaltungen mit drei, vier, fünf oder mehr als sechs Helices möglich. Durch die Ausbildung mehrerer Helices, beispielsweise sechs, ergibt sich am Austritt des Luftausströmers insbesondere ein gleichmäßiges Strömungsprofil.

Zur Bildung des Helix oder der Helices sind mehrere der Luftleitelemente zweckmäßigerweise mittels Verstellelementen verstellbar. In einer Ausführungsform sind die Verstellelemente als Zahnräder oder Zahnsegmente ausgebildet. Dabei greifen die Zahnräder oder Zahnsegmente vorzugsweise in Zähne eines den äußeren Luftführungskanal umgebenden Betätigungsringes ein. Die formschlüssige Verbindung durch Verstellelemente in Form von Zahnrädern oder Zahnsegmenten mit einem Zahnkranz ermöglicht eine hohe Funktionssicherheit der mindestens einen verstellbaren Helix.

Alternativ oder zusätzlich sind mehrere der Luftleitelemente mittels Verstellelementen verstellbar, die als in Kulissenführungen eingreifende Drehhebel ausgebildet sind. Die Kulissenführungen sind dabei vorzugsweise in einem den äußeren Luftführungskanal umgebenden Betätigungsring angeordnet. Die formschlüssige Verbindung durch Verstellelemente in Form von in Kulissenführungen eingreifenden Drehhebeln ermöglicht ebenfalls eine hohe Funktionssicherheit der mindestens einen verstellbaren Helix.

Alternativ oder zusätzlich sind mehrere der Luftleitelemente vorteilhafterweise flexibel ausgebildet und verwindbar gelagert. Die Lagerstellen der flexiblen Luftleitelemente sind dabei vorzugsweise mittels eines den äußeren Luftführungskanal umgebenden Betätigungsrings verdrehbar. Auch diese Gestaltung ermöglicht eine hohe Funktionssicherheit der mindestens einen verstellbaren Helix.

In einer bevorzugten Ausgestaltung besteht ein den äußeren Luftführungskanal umgebender Betätigungsring aus mindestens zwei miteinander verbundenen Teilen. Dies ermöglicht eine einfache Montage des Betätigungsrings.

Vorteilhafterweise sind dabei die Teile des Betätigungsrings miteinander verschnappt. Dies stellt eine einfache und funktionssichere Art der Verbindung dar.

In besonderen Ausgestaltungen sind die Luftführungskanäle zylindrisch und koaxial ausgebildet. Dies ermöglicht eine einfache Herstellung und einen symmetrischen Strömungsverlauf.

Bevorzugt sind Ausgestaltungen, in denen die Luftleitelemente an einer inneren Seite des äußeren Luftführungskanals eine gerade Kante aufweisen.

Dies ermöglicht eine weite Drehbewegung der Luftleitelemente. Dabei ist vorzugsweise ein Zentralelement oder ein innerer Kanal im Bereich einer Helixstellung der Luftleitelemente mit geraden Dichtungskanten versehen. Dadurch liegt die Helix am inneren Rand dicht am Zentralelement beziehungsweise am inneren Kanal an. Ein Druckverlust in diesem Bereich wird so vermieden.

Bevorzugt werden im Fahrzeuginnenraum mehrere, der Erfindung folgende Luftausströmer angeordnet, wobei diese insbesondere einzeln und/oder mehrfach in ihren Verstellmöglichkeiten gekoppelt ausgeführt sind.

Ausführungsbeispiele der Erfindung werden anhand von Zeichnungen näher erläutert. Darin zeigen:
- Fig. 1: eine geöffnete, perspektivische Darstellung eines ersten zweikanaligen Luftausströmers mit zwei verstellbaren Helices,
- Fig. 2a: eine geöffnete, perspektivische Darstellung eines zweiten zweikanaligen Luftausströmers mit sechs verstellbaren Helices,
- Fig. 2b: den zweiten Luftausströmers in einer weiteren geöffneten, teilschnittartigen Darstellung,
- Fig. 2c: einen Querschnitt des zweiten Luftausströmers,
- Fig. 2d: eine perspektivische Außenansicht des zweiten Luftausströmers und
- Fig. 3: einen perspektivischen Querschnitt eines dritten zweikanaligen Luftausströmers mit vier flexiblen Helices.

Einander entsprechende Teile sind in allen Figuren mit den gleichen Bezugszeichen versehen.

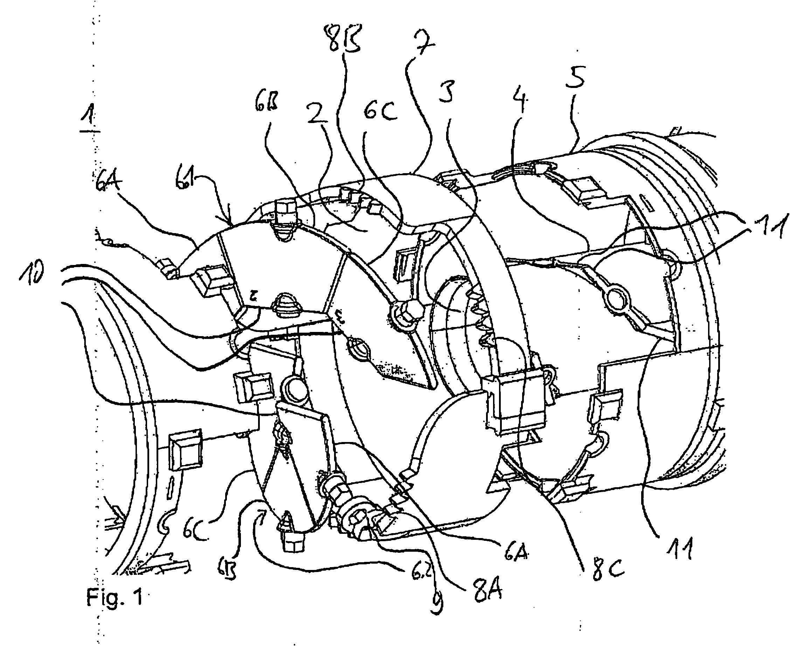

Der in Figur 1 dargestellte Luftausströmer 1 weist einen äußeren Luftführungskanal 2 für einen diffuse Belüftung und einen inneren Luftführungskanal 3 für eine spotförmige Belüftung auf. Der innere Luftführungskanal 3 verläuft in einem inneren Zylinder 4 und wird von dem äußeren Luftführungskanal 2 umgeben. Der äußere Luftführungskanal 2 verläuft parallel zu dem inneren Luftführungskanal 3 zwischen dem inneren Zylinder 4 und einem damit konzentrischen äußeren Zylinder 5. Zur besseren Übersicht ist der innere Zylinder 4 in der Darstellung aus seiner eigentlichen Position verschoben.

Im äußeren Luftführungskanal 2 sind auf derselben Höhe zwei verstellbare Helices 6.1, 6.2 angeordnet. Jede Helix 6.1, 6.2 besteht aus jeweils drei Teilsegmente, die verstellbare Luftleitelemente 6A, 6B, 6C bilden. Die Luftleitelemente 6A bis 6C sind hierzu einerseits am inneren Zylinder 4 und anderseits am äußeren Zylinder 5 drehbar gelagert sind. Die Luftleitelemente 6A, 6B, 6C sind entsprechend einer gleichmäßigen Parametrisierung der Helices 6.1, 6.2 gekrümmt. Im abgebildeten Zustand stoßen zwei Kanten benachbarter Luftleitelemente 6A, 6B beziehungsweise 6B, 6C bündig aufeinander, so dass die Helices 6.1, 6.2 durchgehende Flächen aufweisen und eine Drallströmung im äußeren Luftführungskanal 2 erzeugen.

Um den äußeren Zylinder 5 und damit um den äußeren Luftführungskanal 2 ist ein Betätigungsring 7 angeordnet, der aus drei miteinander verschnappten Teilen zusammengesetzt ist. Der Betätigungsring 7 weist mehrere versetzte Gruppen von Zähnen 8A, 8B, 8C auf. Korrespondierende Verstellelemente, die in diesem Fall als Zahnsegmente 9 ausgeführt sind, sind mit den Luftleitelementen 6A, 6B, 6C verbunden. In der Abbildung ist aus Gründen der Übersicht nur ein Zahnsegment 9 dargestellt. Über die als Zahnsegmente 9 ausgeführten Verstellelemente können die Luftleitelemente 6A, 6B, 6C verstellt, insbesondere gedreht und damit die betreffenden Helices 6.1, 6.2 verstellt werden. Die Zahnsegmente 9, greifen zu diesem Zweck in eine jeweilige Gruppe von Zähnen 8A, 8B, 8C ein. In einer Variante können die Verstellelemente mit einem Zahnsegment auch einteilig ausgeführt werden.

Die Luftleitelemente 6A, 6B, 6C weisen an ihren, dem inneren Zylinder 4 zugewandten Seiten gerade Kanten 10 auf. Auf der Außenseite des inneren Zylinders 4 sind gerade Dichtungskanten 11 so angeordnet, dass sie mit den Kanten 10 der Luftleitelemente 6A, 6B, 6C gerade in der Stellung der geschlossenen Helices 6.1, 6.2 korrespondieren. In einer gedachten Projektion entlang der Längsachse des inneren Zylinders 4 bilden die Dichtungskanten 11 ein geschlossenes Sechseck.

Werden die Luftleitelemente 6A, 6B, 6C über den Betätigungsringes 7 verstellt, so werden die Helices 6.1, 6.2 dadurch unterbrochen. Der in der Strömung bewirkte Drall verringert sich dadurch. Der Druckabfall im äußeren Luftführungskanal 2 wird aufgrund der geänderten Wirkung der Luftleitelemente 6A, 6B, 6C als Strömungshindernisse verringert. Der Anstellwinkel der Luftleitelemente 6A, 6B, 6C kann dabei durch den Grad der Verdrehung des Betätigungsrings 7 in einem großen Bereich eingestellt werden. Durch entgegengesetztes Drehen des Betätigungsrings 7 kann der geschlossene Zustand der Helix 6 wiederhergestellt werden.

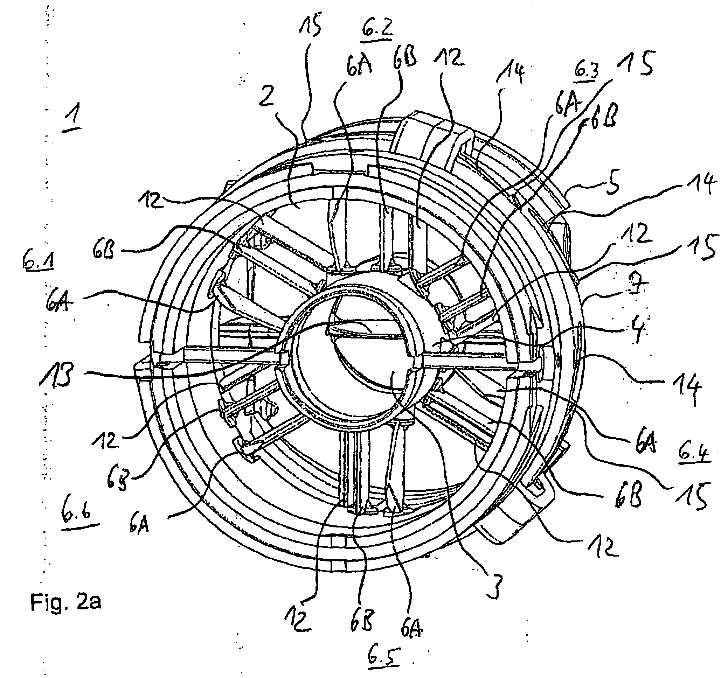

In den Figuren 2a bis 2d ist ein weiterer Luftausströmer 1 mit äußerem Luftführungskanal 2 und innerem Luftführungskanal 3 abgebildet. Er verfügt über sechs verstellbare Helices 6.1 bis 6.6, die auf gleicher Höhe im äußeren Luftführungskanal 2 angeordnet sind. Jede Helix 6.1 bis 6.6 besteht aus zwei durch Drehung verstellbaren Luftleitelementen 6A und 6B. Die Luftleitelemente 6A, 6B sind dabei eben ausgeführt, so dass die Helices 6.1 bis 6.6 stückweise linear ausgebildet sind.

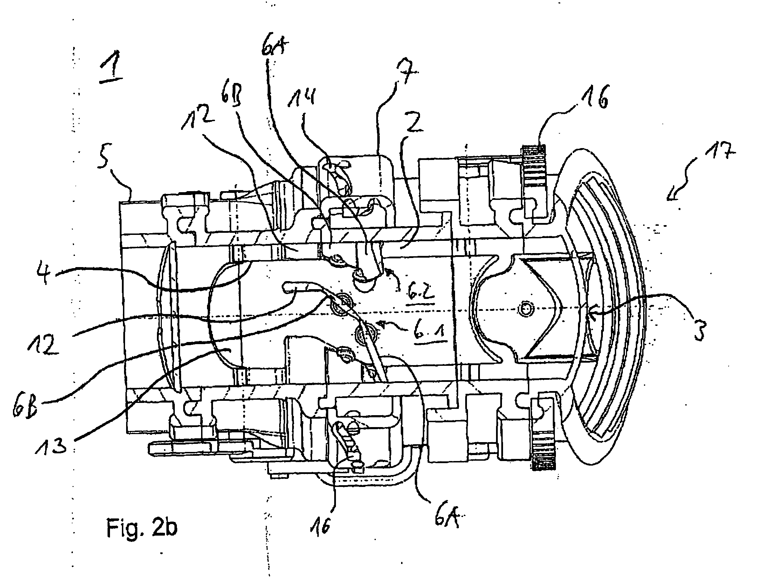

In Figur 2a sind die Helices 6.1 bis 6.6 vollständig geöffnet dargestellt. Sie weisen in dieser Stellung minimalen Druckabfall und Geräuschentwicklung auf. In den Figuren 2b bis 2d ist jede Helix 6.1 bis 6.6 durchgehend geschlossen.

Zusätzlich sind im Strömungsverlauf vor den Helices 6.1 bis 6.6 feste Speichen 12 im äußeren Luftführungskanal 2 angeordnet, die als zu den Zylindern 4, 5 parallele Luftleitelemente ausgebildet sind. Bei geschlossener Stellung der Helices 6.1 bis 6.6 wirken die festen Speichen 12 als dritte Teilsegmente der jeweiligen Helix 6.1 bis 6.6 (siehe Figur 2b).

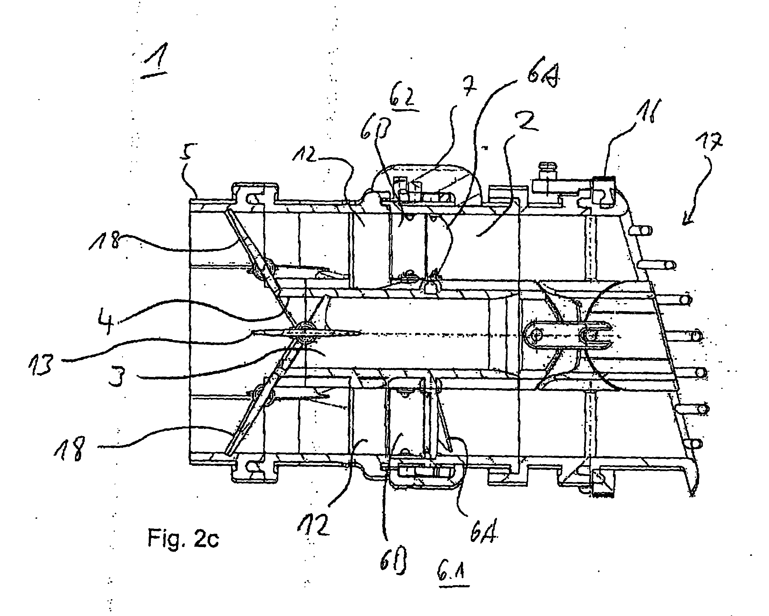

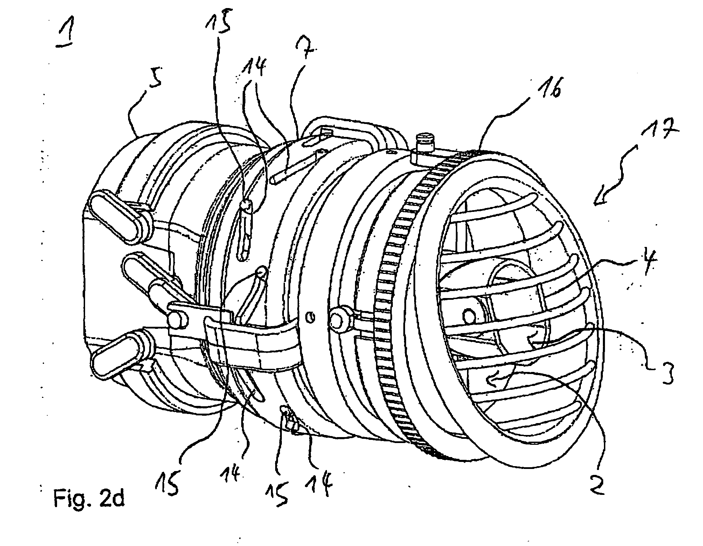

Im inneren Luftführungskanal 3 ist eine Klappe 13 angeordnet, mittels derer der innere Luftführungskanal 3 verschließbar ist (siehe Figur 2a). Der Schließmechanismus der Klappe 13 ist formschlüssig mit dem Betätigungsring 7 verbunden. Der Betätigungsring 7 ist wie in Figur 1 aus mehreren Teilen zusammengesetzt. Er weist sechs Schlitze als Kulissenführungen 14 auf. In die Kulissenführungen 14 greifen Drehhebel 15 ein, die mit den jeweiligen Luftleitelementen 6A, 6B verbunden sind und somit als Verstellelemente dienen. Bei einer Drehbewegung des Betätigungsrings 7 bewirken die Kulissenführungen 14 eine gemeinsame Drehung aller zwölf Luftleitelemente 6A, 6B. Die formschlüssige Verbindung mit der Klappe 13 bewirkt dabei ein simultanes Öffnen beziehungsweise Schließen der Klappe 13. In der, den Luftführungskanal 3 öffnenden Stellung, liegt die Klappe im Wesentlichen in der Ebene der Achse des Luftkanals 3. Wie in den Figuren 2 skizziert, schließt die Klappen 13 beziehungsweise deren Schließfläche, in der den Luftkanal 13 verschließenden Stellung, mit der Achse des Luftkanals 3 einen Winkel kleiner als 90 Grad, vorliegend etwa 60 Grad, ein und ist demnach in dieser Position schrägstehend zum Luftkanal 3.

Der Betätigungsring 7 ist in nicht abgebildeter Art und Weise mit einem Bedienelement 16 verbunden, das an der Ausströmöffnung 17 des Luftausströmers 1 angeordnet ist. Der Betätigungsring 7 ist als Ring ausgebildet, welcher beide Luftführungskanäle 2, 3 umgibt. Der Betätigungsring 7 ist so mit dem Bedienelement 16 verbunden, dass eine Drehung des Bedienelements 16 eine gleichsinnige Drehung des Betätigungsrings 7 bewirkt.

Werden die Luftleitelemente 6A, 6B mittels des Bedienelements 16 über den Betätigungsring 7 und die Drehhebel 15 aus der, beispielsweise in Fig. 2b dargestellten Stellung verstellt, so werden die Helices 6.1 bis 6.6 unterbrochen und die Klappe 13 geöffnet. Der in der Strömung bewirkte Drall verringert sich dadurch. Der Druckabfall im äußeren Luftführungskanal 2 wird aufgrund der geänderten Wirkung der Luftleitelemente 6A, 6B als Strömungshindemisse erheblich verringert. Der Anstellwinkel der Luftleitelemente 6A, 6B kann dabei durch den Grad der Verdrehung des Bedienelements 16 in einem großen Bereich eingestellt werden. Durch entgegengesetztes Drehen kann der geschlossene Zustand der Helices 6.1 bis 6.6 und der geschlossenen Klappe 13 wiederhergestellt werden. Abschlussklappen 18 im Bereich des äußeren Luftführungskanals 2 können separat bedient werden.

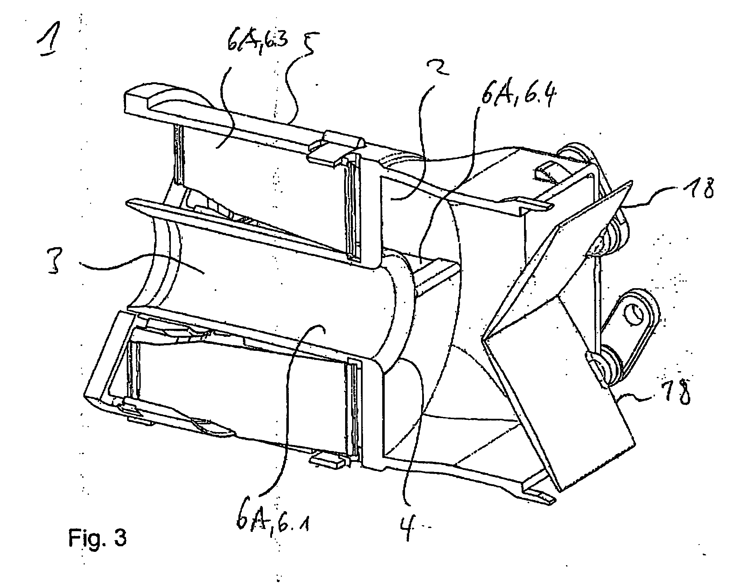

Figur 3 zeigt einen anderen Luftausströmer 1 mit innerem Luftführungskanal 3 und äußerem Luftführungskanal 2, bei dem vier Helices 6.1 bis 6.4 aus einem einzigen, jeweils flexiblen Luftleitelement 6A bebildet sind. Die flexiblen Luftleitelemente 6A sind an beiden Enden jeweils am inneren Zylinder 4 und am äußeren Zylinder 5 so drehbar gelagert, dass sie durch Verdrehen der Lagerungen in sich verwindbar sind. Die Lagerungen sind über einen nicht abgebildeten Betätigungsring verdrehbar, der beide Luftführungskanäle 2, 3 umgibt. Der Luftausströmer 1 ist zudem mit Abschlussklappen 18 versehen, mittels derer beide Luftführungskanäle 2, 3 gemeinsam verschließbar sind.

Werden die Luftleitelemente 6A mittels des Betätigungsrings verwunden, so werden die Helices 6.1 bis 6.4 dadurch verformt. Der in der Strömung bewirkte Drall verringert sich hierdurch. Der Druckabfall im äußeren Luftführungskanal 2 wird aufgrund der veränderten Wirkung der Luftleftelemente 6A als Strömungshindernisse erheblich verringert. Die Verwindung der Luftleitelemente 6A kann dabei durch den Grad der Verdrehung des Bedienelements 16 in einem großen Bereich eingestellt werden. Durch entgegengesetztes Drehen kann der Zustand der Helices 6.1 bis 6.4 wiederhergestellt werden. Die Abschlussklappe 18 kann separat bedient werden.

In erweiterten Ausführungsformen können Verstellelemente in Form von Zahnsegmenten, Zahnrädern, Drehhebeln und drehbare Lagerungen beliebig kombiniert werden.

Auch können mehrere Reihen von Helices 6.1 bis 6.6 hintereinander im äußeren Luftführungskanal 2 angeordnet sein.

## Patentansprüche

1. Luftausströmer (1), insbesondere für einen Fahrzeuginnenraum, mit mindestens einem Luftführungskanal (2) und in diesem angeordneten Luftleitelementen (6A, 6B, 6C), wobei mittels Verstellen der Luftleitelemente (6A, 6B, 6C) mindestens eine Helix (6.1 bis 6.6) zum Erzeugen einer einstellbaren Drallströmung bildbar ist, **dadurch gekennzeichnet, dass** die Helix (6.1 bis 6.6) in axialer Richtung des Luftausströmers in mindestens zwei Teilsegmente untergliedert ist, die von den Luftleitelementen (6A, 6B, 6C) gebildet sind.

2. Luftausströmer (1) nach Anspruch 1, **dadurch gekennzeichnet, dass** der Luftführungskanal (2) als ein Ringrohr ausgebildet und um ein Zentralelement herum angeordnet ist.

3. Luftausströmer (1) nach Anspruch 1, **dadurch gekennzeichnet, dass** der Luftführungskanal (2) als ein äußerer Ringkanal einen weiteren, inneren Luftführungskanal (3) umgibt und parallel zu diesem verläuft.

4. Luftausströmer (1) nach Anspruch 3, **gekennzeichnet durch** eine Klappe (13) im inneren Luftführungskanal (3), welche mit einem Bedienelement (16) verbunden ist, das der Verstellung der Luftleitelemente (6A, 6B, 6C) dient.

5. Luftausströmer (1) nach Anspruch 4, **dadurch gekennzeichnet, dass** das Bedienelement (16) als Verstellring an einer Austrittsöffnung (17) des Luftausströmers (1) ausgebildet ist und beide Luftführungskanäle (2, 3) umgibt.

6. Luftausströmer (1) nach einem der Ansprüche 1 bis 5, **dadurch gekennzeichnet, dass** in mindestens einer Stellung der Luftleitelemente (6A bis 6C) zwei oder sechs Helices (6.1 bis 6.6) gebildet sind.

7. Luftausströmer (1) nach einem der vorhergehenden Ansprüche, **dadurch gekennzeichnet, dass** mehrere der Luftleitelemente (6A, 6B, 6C) mittels Verstellelementen verstellbar sind, die als Zahnräder oder Zahnsegmente (9) ausgebildet sind.

8. Luftausströmer (1) nach Anspruch 7, **dadurch gekennzeichnet, dass** die Zahnräder oder Zahnsegmente (9) in Zähne (8A, 8B, 8C) eines den äußeren Luftführungskanal (2) umgebenden Betätigungsringes (7) eingreifen.

9. Luftausströmer (1) nach einem der vorhergehenden Ansprüche, **dadurch gekennzeichnet, dass** mehrere der Luftleitelemente (6A, 6B, 6C) mittels Verstellelementen verstellbar sind, die als in Kulissenführungen (14) eingreifende Drehhebel (15) ausgebildet sind.

10. Luftausströmer (1) nach Anspruch 9, **dadurch gekennzeichnet, dass** die Kulissenführungen (14) in einem den äußeren Luftführungskanal (2) umgebenden Betätigungsring (7) angeordnet sind.

11. Luftausströmer (1) nach einem der vorhergehenden Ansprüche, **dadurch gekennzeichnet, dass** mehrere der Luftleitelemente (6A) flexibel ausgebildet und verwindbar gelagert sind.

12. Luftausströmer (1) nach Anspruch 11, **dadurch gekennzeichnet, dass** die Lagerstellen der flexiblen Luftleitelemente (6A) mittels eines den äußeren Luftführungskanal (2) umgebenden Betätigungsring (7) verdrehbar sind.

13. Luftausströmer (1) nach einem der vorhergehenden Ansprüche, **dadurch gekennzeichnet, dass** ein den äußeren Luftführungskanal (2) umgebender Betätigungsring (7) aus mindestens zwei miteinander verbundenen Teilen besteht.

14. Luftausströmer (1) nach Anspruch 13, **dadurch gekennzeichnet, dass** die Teile des Betätigungsrings (7) miteinander verschnappt sind.

15. Luftausströmer (1) nach einem der vorhergehenden Ansprüche, **dadurch gekennzeichnet, dass** die Luftleitelemente (6A, 6B, 6C) gekrümmt oder eben sind.

16. Luftausströmer (1) nach einem der vorhergehenden Ansprüche, **dadurch gekennzeichnet, dass** die Luftführungskanäle (2, 3) zylindrisch und koaxial ausgebildet sind.

17. Luftausströmer (1) nach einem der vorhergehenden Ansprüche, **dadurch gekennzeichnet, dass** die Luftleitelemente (6A, 6B, 6C) an einer inneren Seite des äußeren Luftführungskanals (2) eine gerade Kante (10) aufweisen.

18. Luftausströmer (1) nach Anspruch 17, **dadurch gekennzeichnet, dass** ein Zentralelement oder ein innerer Kanal (3) im Bereich einer Helixstellung der Luftleitelemente (6A, 6B, 6C) mit geraden Dichtungskanten (11) versehen ist.

## Claims

1. Air duct (1), especially for the interior of a vehicle, with at least one air guiding channel (2) and air guiding elements (6A, 6B, 6C) arranged therein, wherein at least one helix (6.1 to 6.6) for generating an adjustable vortex flow can be formed by means of adjusting the air guiding elements (6A, 6B, 6C), **characterised in that** the helix (6.1 to 6.6) is subdivided into at least two partial segments in the axial direction of the air duct, which segments are formed by the air guiding elements (6A, 6B, 6C).

2. Air duct (1) according to claim 1, **characterised in that** the air guiding channel (2) is formed as an annular tube and is arranged around a central element.

3. Air duct (1) according to claim 1, **characterised in that** the air guiding channel (2) as an outer annular channel surrounds a further inner air guiding channel (3) and proceeds parallel thereto.

4. Air duct (1) according to claim 3, **characterised by** a flap (13) in the inner air guiding channel (3), which is connected to an operating element (16), which serves for the adjustment of the air guiding elements (6A, 6B, 6C).

5. Air duct (1) according to claim 4, **characterised in that** the operating element (16) is formed as an adjustment ring at an outlet opening (17) of the air duct (1) and surrounds both air guiding channels (2, 3).

6. Air duct (1) according to one of claims 1 to 5, **characterised in that** two or six helices (6.1 to 6.6) are formed in at least one position of the air guiding elements (6A to 6C).

7. Air duct (1) according to one of the preceding claims, **characterised in that** several of the air guiding elements (6A, 6B, 6C) can be adjusted by means of adjusting elements, which are formed as gear wheels or gear segments (9).

8. Air duct (1) according to claim 7, **characterised in that** the gear wheels or gear segments (9) engage teeth (8A, 8B, 8C) of an actuation ring (7) surrounding the outer air guiding channel (2).

9. Air duct (1) according to one of the preceding claims, **characterised in that** several of the air guiding elements (6A, 6B, 6C) can be adjusted by means of adjustment elements, which are formed as pivots (15) engaging guide bars (14).

10. Air duct (1) according to claim 9, **characterised in that** the guide bars (14) are arranged in an actuation ring (7) surrounding the outer air guiding channel (2).

11. Air duct (1) according to one of the preceding claims, **characterised in that** several of the air guiding elements (6A) are formed in a flexible manner and are mounted in a deflectable manner.

12. Air duct (1) according to claim 11, **characterised in that** the bearing positions of the flexible air guiding elements (6A) can be rotated by means of an actuation ring (7) surrounding the outer air guiding channel (2).

13. Air duct (1) according to one of the preceding claims, **characterised in that** an actuation ring (7) surrounding the outer air guiding channel (2) consists of at least two parts connected to one another.

14. Air duct (1) according to claim 13, **characterised in that** the parts of the actuation ring (7) are latched to one another.

15. Air duct (1) according to one of the preceding claims, **characterised in that** the air guiding elements (6A, 6B, 6C) are arcuate or planar.

16. Air duct (1) according to one of the preceding claims, **characterised in that** the air guiding channels (2, 3) are formed in a cylindrical and coaxial manner.

17. Air duct (1) according to one of the preceding claims, **characterised in that** the air guiding elements (6A, 6B, 6C) have a straight edge (10) at an inner side of the outer air guiding channel (2).

18. Air duct (1) according to claim 17, **characterised in that** a central element or an inner channel (3) is provided with straight sealing edges in the region of a helix position of the air guiding elements (6A, 6B, 6C).

## Revendications

1. Diffuseur d'air (1), en particulier pour l'habitacle d'un véhicule, comprenant au moins un conduit de guidage d'air (2) et des éléments déflecteurs d'air (6A, 6B, 6C) disposés dans ce conduit de guidage d'air où, par déplacement des éléments déflecteurs d'air (6A, 6B, 6C), il peut se former au moins une hélice (6.1 à 6.6) pour la production d'un écoulement tourbillonnaire réglable,
**caractérisé en ce que** l'hélice (6.1 à 6.6) est subdivisée en au moins deux segments partiels, dans le sens axial du diffuseur d'air, segments partiels qui sont formés par les éléments déflecteurs d'air (6A, 6B, 6C).

2. Diffuseur d'air (1) selon la revendication 1, **caractérisé en ce que** le conduit de guidage d'air (2) est configuré comme un tube annulaire et disposé tout autour d'un élément central.

3. Diffuseur d'air (1) selon la revendication 1, **caractérisé en ce que** le conduit de guidage d'air (2) entoure, comme un conduit annulaire extérieur, un autre conduit de guidage d'air intérieur (3) et s'étend parallèlement à celui-ci.

4. Diffuseur d'air (1) selon la revendication 3, **caractérisé par** un volet (13) placé dans le conduit de guidage d'air intérieur (3), volet qui est relié à un élément de commande (16) qui sert au déplacement des éléments déflecteurs d'air (6A, 6B, 6C).

5. Diffuseur d'air (1) selon la revendication 4, **caractérisé en ce que** l'élément de commande (16) est configuré comme un anneau de réglage placé au niveau d'une ouverture de sortie (17) du diffuseur d'air (1) et entoure les deux conduits de guidage d'air (2, 3).

6. Diffuseur d'air (1) selon l'une quelconque des revendications 1 à 5, **caractérisé en ce que** deux ou six hélices (6.1 à 6.6) sont formées dans au moins une position des éléments déflecteurs d'air (6A à 6C).

7. Diffuseur d'air (1) selon l'une quelconque des revendications précédentes, **caractérisé en ce que** plusieurs éléments parmi les éléments déflecteurs d'air (6A, 6B, 6C) peuvent être déplacés au moyen d'éléments mobiles qui sont configurés comme des roues dentées ou des segments dentés (9).

8. Diffuseur d'air (1) selon la revendication 7, **caractérisé en ce que** les roues dentées ou segments dentés (9) viennent en prise dans des dents (8A, 8B, 8C) d'un anneau de commande (7) entourant le conduit de guidage d'air extérieur (2).

9. Diffuseur d'air (1) selon l'une quelconque des revendications précédentes, **caractérisé en ce que** plusieurs éléments parmi les éléments déflecteurs d'air (6A, 6B, 6C) peuvent être déplacés au moyen d'éléments mobiles qui sont configurés comme des leviers rotatifs (15) venant en prise dans des guides de coulisses (14).

10. Diffuseur d'air (1) selon la revendication 9, **caractérisé en ce que** les guides de coulisses (14) sont disposés dans un anneau de commande (7) entourant le conduit de guidage d'air extérieur (2).

11. Diffuseur d'air (1) selon l'une quelconque des revendications précédentes, **caractérisé en ce que** plusieurs éléments parmi les éléments déflecteurs d'air (6A) sont configurés de façon flexible et montés de façon déformable.

12. Diffuseur d'air (1) selon la revendication 11, **caractérisé en ce que** les points d'appui des éléments déflecteurs d'air flexibles (6A) peuvent être placés en torsion au moyen d'un anneau de commande (7) entourant le conduit de guidage d'air extérieur (2).

13. Diffuseur d'air (1) selon l'une quelconque des revendications précédentes, **caractérisé en ce qu'**un anneau de commande (7) entourant le conduit de guidage d'air extérieur (2) se compose d'au moins deux parties assemblées l'une à l'autre.

14. Diffuseur d'air (1) selon la revendication 13, **caractérisé en ce que** les parties de l'anneau de commande (7) sont assemblées l'une à l'autre de façon encliquetable.

15. Diffuseur d'air (1) selon l'une quelconque des revendications précédentes, **caractérisé en ce que** les éléments déflecteurs d'air (6A, 6B, 6C) sont courbes ou plans.

16. Diffuseur d'air (1) selon l'une quelconque des revendications précédentes, **caractérisé en ce que** les conduits de guidage d'air (2, 3) sont configurés de façon cylindrique et coaxiale.

17. Diffuseur d'air (1) selon l'une quelconque des revendications précédentes, **caractérisé en ce que** les éléments déflecteurs d'air (6A, 6B, 6C) présentent un bord rectiligne (10) au niveau d'un côté intérieur du conduit de guidage d'air extérieur (2).

18. Diffuseur d'air (1) selon la revendication 17, **caractérisé en ce qu'**un élément central ou un conduit intérieur (3) est doté, dans la zone d'une position d'hélice des éléments déflecteurs d'air (6A, 6B, 6C), de bords d'étanchéité rectilignes (11).
